# EUROPÄISCHE PATENTSCHRIFT

(11) **EP 2 419 455 B1**
(45) Veröffentlichungstag und Bekanntmachung des Hinweises auf die Patenterteilung: **16.01.2013**
(21) Anmeldenummer: 10712073.5
(22) Anmeldetag: 31.03.2010
(51) Int. Cl.: C08C 1/04, C09J 111/02, C08L 11/02, C08C 2/00, C08L 11/00, C08F 36/18

(54) **VERFAHREN ZUR HERSTELLUNG EINER POLYMER-DISPERSION AUF BASIS VON POLYCHLOROPREN SOWIE ANLAGE ZUR HERSTELLUNG EINER POLYMER-DISPERSION AUF BASIS VON POLYCHLOROPREN**
METHOD FOR PRODUCING A POLYCHLOROPRENE-BASED POLYMER DISPERSION AND SYSTEM FOR PRODUCING A POLYCHLOROPRENE-BASED POLYMER DISPERSION
PROCÉDÉ DE FABRICATION D'UNE DISPERSION DE POLYMÈRE À BASE DE POLYCHLOROPRÈNE, AINSI QU'INSTALLATION DE FABRICATION D'UNE DISPERSION DE POLYMÈRE À BASE POLYCHLOROPRÈNE

(30) Priorität: 17.04.2009 EP 09158147
(43) Veröffentlichungstag der Anmeldung: 22.02.2012
(73) Patentinhaber: Lanxess Deutschland GmbH, 51369 Leverkusen (DE)
(72) Erfinder: DEBAYLE, Pascal, Moulin de France (FR); HOELTZENBEIN, Peter, Calgary Alberta T2T 1N1 (CA); MOTTWEILER, Renke, 51373 Leverkusen (DE); MÜLLER, Eberhardt, 41540 Dormagen (DE); GRÄFE, Rainer, 51467 Bergisch Gladbach (DE); MÄHNER-WOLFARTH, Christian, 41541 Dormagen (DE); NEUNER, Thomas-Oliver, 40721 Hilden (DE); FIDAN, Mesut, 41539 Dormagen (DE); LAGARDE, Marc, F-69007 Lyon (FR)
(74) Vertreter: Michalski Hüttermann & Partner
(86) Internationale Anmeldenummer: PCT/EP2010/054303
(87) Internationale Veröffentlichungsnummer: WO 2010/118958

(56) Entgegenhaltungen:
- EP-A- 1 624 018
- EP-A- 1 903 063
- WO-A-02/24825
- WO-A-2004/106422
- DE-A1-102006 060 378
- US-A- 4 278 506
- US-A- 5 407 993

## Beschreibung

Die vorliegende Erfindung betrifft ein Verfahren und eine Anlage zur Herstellung einer Polymer-Dispersion auf Basis von Polychloropren.

Aus DE 10 2006 060 378 A1 ist es bekannt durch eine Polymerisation von monomeren Chloropren eine Polychloropren (CR) Dispersion zu erhalten, wobei bei der Polymerisation 50% bis 95% des eingesetzten Chloroprens umgesetzt wird. Bei einer nachfolgenden Wasserdampfdestillation kann nicht polymerisiertes Chloropren (Restmonomer) auf einen Anteil an monomeren Chloropren in der Polychloropren Dispersion auf Werte um 100ppm oder 50ppm und weniger abgesenkt werden.

Gemäß JP 61-060843 B2 hat sich die Wasserdampfdestillation von Polychloropren Dispersionen in der Praxis als unwirtschaftlich erwiesen, da Leitungen und Apparate der verwendeten Wasserdampfdestillationskolonne sehr schnell durch sich bildendes Polychloropren-Koagulat verstopft wurden und nach kurzer Betriebszeit die verwendete Wasserdampfdestillationskolonne abgestellt und gereinigt werden musste.

Aus WO 02/24825 A1 ist es bekannt für einen Kleber auf Basis von Polychloropren verbleibende Monomere durch Wasserdampfdestillation zu entfernen.

Polymer-Dispersionen auf Basis von Polychloropren werden beispielsweise für Tauchartikel, Formschaum oder als Bestandteil von Kontaktklebstoffen verwendet. Da monomeres Chloropren leicht entzündlich und giftig ist, besteht ein beständiges Bedürfnis den Anteil von monomeren Chloropren (Restmonomer) in Polychloropren Dispersionen weiter zu senken, um den Umgang mit auf Basis von Polychloropren Dispersionen hergestellten Produkten, wie beispielsweise Klebstoffen, zu verbessern und zu erleichtern.

Es ist die Aufgabe der Erfindung ein Verfahren und eine Anlage zur Herstellung einer Polymer-Dispersion auf Basis von Polychloropren bereit zu stellen, mit deren Hilfe der Anteil von monomeren Chloropren in Polychloropren Dispersionen gesenkt werden kann ohne eine signifikante Reduzierung der Betriebszeiten der verwendeten Anlagenteile in Kauf nehmen zu müssen.

Die Lösung der Aufgabe erfolgt erfindungsgemäß durch ein Verfahren mit den Merkmalen des Anspruchs 1 sowie einer Anlage mit den Merkmalen des Anspruchs 11. Vorteilhafte Ausgestaltungen der Erfindung sind in den Unteransprüchen angegeben.

Die Lösung der Aufgabe erfolgt erfindungsgemäß durch ein Verfahren mit den Merkmalen des Anspruchs 1 sowie einer Anlage mit den Merkmalen des Anspruchs 11. Vorteilhafte Ausgestaltungen der Erfindung sind in den Unteransprüchen angegeben.

Bei dem erfindungsgemäßen Verfahren zur Herstellung einer Polymer-Dispersion auf Basis von Polychloropren erfolgt ein Durchführen einer Polymerisation von Chloropren zu Polychloropren in einer Emulsion bis zu einem maximalen Feststoffanteil w_{solid} in Gewichtsanteilen von w_{solid} ≤ 50%, insbesondere w_{solid} ≤ 40%, vorzugsweise w_{solid} ≤ 35% und besonders bevorzugt w_{solid} ≤ 30% in einer nach der Polymerisation vorliegenden Polychloropren-Dispersion, und ein Abtrennen von Chloropren aus der Polychloropren-Dispersion in einer mehrstufigen und/oder mehrbödigen Stripper-Kolonne bis zu einem Chloroprenanteil w_{CR}.ₒᵤₜ in Gewichtsanteilen von w_{CR.out} ≤ 50ppm, insbesondere w_{CR,out} ≤ 30ppm, vorzugsweise w_{CR,out} ≤ 15ppm und besonders bevorzugt w_{CR,out} ≤ 10ppm in einer nach dem Abtrennen von Chloropren vorliegenden gereinigten Polychloropren-Dispersion. Eine während und/oder nach der chemischen Polymerreaktion durchgeführte Verdünnung des erhaltenen Produkts mit wässriger Phase und/oder Wasser wird als Bestandteil der Polymerisation verstanden.

Der Feststoff in der Polychloropren-Dispersion nach der Polymerisation wird im Wesentlichen durch Polychloropren ausgebildet. Die Bestimmung des Feststoffanteils erfolgt nach ISO 124. Der Gewichtsanteil von Polychloropren an den Feststoffen in der Polychloropren-Dispersion beträgt insbesondere ≥ 80%, vorzugsweise ≥ 90%. Der minimale Gewichtsanteil w_{CR,out,min} von Chloropren in der nach dem Abtrennen von Chloropren vorliegenden gereinigten Polychloropren-Dispersion beträgt insbesondere w_{CR,out,min} ≥ 1ppm, vorzugsweise w_{CR,out,min} ≥ 0,5ppm. Besonders bevorzugt liegt der minimale Gewichtsanteil w_{CR.out,min} von Chloropren unterhalb der Nachweisgrenze üblicher Routineanalytiken, die in der Regel bei 0,5ppm liegt. Der minimale Gewichtsanteil w_{solid,min} von Feststoff in der nach der Polymerisation vorliegenden Polychloropren-Dispersion beträgt insbesondere w_{solid,min} ≥ 10%, vorzugsweise w_{solid,min} ≥ 15% und besonders bevorzugt w_{solid,min} ≥ 20%, um einen besonders wirtschaftlichen Betrieb des erfindungsgemäßen Verfahrens zu ermöglichen.

Bei dem erfindungsgemäßen Verfahren wird im Vergleich zu üblichen kontinuierlichen und/oder diskontinuierlichen Polymerisationen von Chloropren zu Polychloropren bewusst ein deutlich geringer Anteil an Polychloropren in der Polychloropren-Dispersion nach der Polymerisation vorgesehen. Dies kann beispielsweise durch einen geringeren Umsatz von Chloropren und/oder einer höheren Menge an wässeriger Phase als üblicherweise vorgesehen erreicht werden, wobei eine während und/oder nach der chemischen Polymerreaktion durchgeführte Verdünnung des erhaltenen Produkts mit wässriger Phase und/oder Wasser als Bestandteil der Polymerisation verstanden wird. Hierbei wird die Erkenntnis ausgenutzt, dass der geringere Anteil an Polychloropren in der Polychloropren-Dispersion nach der Polymerisation zu einem deutlich geringeren Feststoffanteil in der Polychloropren-Dispersion führt, wodurch überraschenderweise eine Abtrennung von Chloropren in einer Stripper-Kolonne, beispielsweise mit Hilfe von Wasserdampf, möglich ist, ohne dass durch Polychloropren-Koagulat verstopfte Leitungen oder Apparate zu befürchten sind. Es ist sogar möglich den Chloropren-Anteil in der gereinigten Polychloropren-Dispersion deutlich abzusenken ohne ein signifikant erhöhtes Risiko von Betriebsausfällen der Stripper-Kolonne in Kauf nehmen zu müssen. Bei dem erfindungsgemäßen Verfahren können ununterbrochene Betriebszeiten der verwendeten Stripper-Kolonne von mehr als 3 Wochen insbesondere mehr als 5 Wochen und besonders bevorzugt mehr als 6 Wochen erreicht werden, während bei einem Feststoffgehalt w_{solid} von ca. 55% eine maximale Betriebszeit von weniger als einem Tag festgestellt wurde. Die Polymerisation kann insbesondere durch Emulsionspolymerisation in einem alkalischen wässrigen Medium, wie beispielsweise in "Ullmanns Encyclopedia of Polymer Science and Technology", Vol. 3, S. 705-730, John Wiley, New York 1965 beschrieben, durchgeführt werden, wobei abweichend der erfindungsgemäß vorgesehene maximalen Feststoffanteil w_{solid} in der Polychloropren-Dispersion nach der Polymerisation berücksichtigt wird und eine hierfür geeignete Prozessführung angewendet wird.

Es wird davon ausgegangen, dass aufgrund des geringeren Feststoffanteils bezogen auf die Polychloropren-Menge vergleichsweise viel wässrige Phase in der Stripper-Kolonne präsent ist und die präsente wässrige Phase ein Verklumpen des Polychloroprens und ein Anbacken des Polychloroprens durch Koagulat-Bildung in der Stripper-Kolonne verhindert. Bei dem erfindungsgemäßen Verfahren wird hierbei der Feststoffanteil in der Polychloropren-Dispersion nach der Polymerisation insbesondere bezogen auf die wässrige Phase derart eingestellt, dass Verstopfungen vermieden werden und gleichzeitig ein besonders geringer Anteil an Chloropren in der die Stripper-Kolonne verlassenden Polychloropren-Dispersion erreicht werden kann. Die Stripper Kolonne wird insbesondere derart betrieben, dass der verwendete Dampf zumindest teilweise kondensiert. Dadurch kann einerseits die Kondensationswärme zum Heizen verwendet werden und gleichzeitig kann die Menge der wässrigen Phase um die Menge des Kondensats erhöht werden, so dass ein ungünstig hoher Feststoffanteil innerhalb der Stripper-Kolonne vermieden werden kann. Die Stripper-Kolonne kann insbesondere durch einen einzelnen Turm mit mehreren Böden ausgebildet werden, wobei jeder Boden den Beginn einer dem jeweiligen Boden zugeordneten einzelnen Stufe des Strip-Prozesses definiert. Insbesondere kann das Strippen bei einem Druck von ≤ 1 bar durchgeführt werden, um das Verdampfen von Chloropren zu erleichtern. Obwohl bei der Polymerisation bewusst ein vergleichsweise geringerer Polychloropren-Anteil eingestellt wird, hat sich diese Maßnahme unter Berücksichtigung der Chloropren-Abtrennung in der Gesamtbetrachtung als wirtschaftlicher erwiesen. Durch die verbesserte Entgasung von Chloropren aus der Polychloropren-Dispersion und der dadurch geringeren Chloropren-Menge im fertigen Produkt ist der Umgang mit auf Basis von Polychloropren-Dispersionen hergestellten Produkten, wie beispielsweise Klebstoffen, verbessert und erleichtert. Insbesondere ist die Arbeitshygiene bei der Weiterverarbeitung der Polychloropren-Dispersion, beispielsweise zu Festkautschuk, verbessert. Der Arbeitsschutz bei der Weiterverarbeitung ist verbessert, wodurch sogar geringere Arbeitsschutzanforderungen möglich sind.

Vorzugsweise weist die der Stripper-Kolonne zugeführte Polychloropren-Dispersion im Wesentlichen die gesamte wässrige Phase der unmittelbar nach der Polymerisation vorliegenden Polychloropren-Dispersion auf, wobei insbesondere der Polychloropren-Dispersion vor der Zufuhr in die Stripper Kolonne zusätzlich wässrige Phase und/oder Wasser zugeführt wurde. Insbesondere wird aus der organischen Phase, sofern überhaupt, lediglich im Wesentlichen Chloropren entfernt, beispielsweise durch Verdampfen. Eine zwischenzeitliche Abscheidung flüssiger Bestandteile wie beispielsweise wässrige Phase, Emulgator, Katalysator, Stabilisator, Aktivator oder Abstopper kann vermieden werden. Statt dessen kann der Polychloropren-Dispersion zusätzlich wässrige Phase und/oder Wasser zugeführt werden, um den Feststoffanteil w_{solid} zu reduzieren beziehungsweise einzustellen. Insbesondere wird die nach der Polymerisation vorliegende Polychloropren-Dispersion kontinuierlich und/oder direkt der Stripper-Kolonne zugeführt.

Besonders bevorzugt wird die Polymerisation kontinuierlich oder quasi-kontinuierlich, insbesondere mit Hilfe einer Kaskade mehrere Batch-Reaktoren, durchgeführt. Da bei dem erfindungsgemäßen Verfahren ein besonders hoher Polychloropren-Anteil nach der Polymerisation aufgrund des erhöhten Feststoff-Anteils nicht erwünscht ist, ist es überhaupt erst möglich eine kontinuierliche oder quasi-kontinuierliche Polymerisation vorzusehen, die im großindustriellen Maßstab wirtschaftlicher als eine Vielzahl von Batch-Reaktionen ist. Es ist auch möglich eine Mehrzahl einzelner Kessel-Reaktoren in Reihe zu schalten, um eine quasi-kontinuierliche Polymerisation zu erreichen, die im großindustriellen Maßstab ebenfalls wirtschaftlicher als eine Vielzahl von Batch-Reaktionen ist.

In einer weiteren Ausführungsform erfolgt die Polymerisation überwiegend durch eine Batch-Reaktion in mindestens einem Batch-Reaktor, wobei die nach der Polymerisation vorliegende Polychloropren-Dispersion vor dem Abtrennen in der Stripper-Kolonne einem Puffer-Tank zugeführt wird, wobei die Polychloropren-Dispersion von dem Puffer-Tank der Stripper-Kolonne im Wesentlichen kontinuierlich zugeführt wird. Dies ermöglicht einen kontinuierlichen Betrieb der Stripper-Kolonne, auch wenn die Polymerisation diskontinuierlich erfolgt, so dass der Betrieb der Stripper-Kolonne besonders wirtschaftlich erfolgen kann. Besonders bevorzugt werden in verschiedenen Batch-Reatoren zeitversetzt die jeweilige Polymerisation durchgeführt, so dass in entsprechend kürzeren Zeitabständen der Puffer-Tank mit dem bei einer jeweiligen Batch-Reaktion erhaltenen Produkt gefüllt werden kann. Insbesondere wird dem Puffer-Tank zusätzliche wässrige Phase zugeführt, um den gewünschten maximalen Feststoffanteil w_{solid} zu gewährleisten.

Insbesondere weist die der Stripper-Kolonne zugeführte Polychloropren-Dispersion einen Chloroprenanteil w_{CR,in} in Gewichtsanteilen von 200ppm ≤ w_{CR,in} ≤ 30000ppm, insbesondere 2000ppm ≤ w_{CR,in} ≤ 20000ppm und besonders bevorzugt 5000ppm ≤ w_{CR,in} ≤ 15000ppm auf. Bei einem derartigen Chloroprenanteil w_{CR,in} der Polychloropren-Dispersion im Feed-Strom der Stripper-Kolonne lässt sich eine Verstopfung der Stripper-Kolonne sicher vermeiden und gleichzeitig ein Chloroprenanteil von w_{CR,out} ≤ 30ppm und sogar w_{CR,out} ≤ 10ppm in der nach dem Abtrennen von Chloropren vorliegenden entgasten Polychloropren-Dispersion erreichen.

Vorzugsweise wird nach dem Durchführen der Polymerisation und vor dem Abtrennen von Chloropren eine Entgasung der nach der Polymerisation vorliegenden Polychloropren-Dispersion durchgeführt. Dadurch können bereits gasförmig vorliegende Komponenten und leicht flüchtige Bestandteile aus der Polychloropren-Dispersion abgetrennt werden ohne hierfür die Stripper-Kolonne zu verwenden. Dadurch ist es möglich einen Gewichtsanteil von ca. 90% des monomeren Chloroprens abzutrennen. Dies reduziert den erforderlichen Dampf-Einsatz zum Abtrennen von Chloropren in der Stripper-Kolonne.

Besonders bevorzugt wird nach dem Abtrennen von Chloropren eine Aufkonzentrierung der gereinigten Polychloropren-Dispersion, insbesondere mit Hilfe eines Aufrahmprozesses, durchgeführt. Dies erfolgt beispielsweise wie in DE 10 145 097 beschrieben mit Hilfe eines Koalesziermittels oder wie in "Neoprene Latices", John C. Carl, E. I. DuPont 1964, S. 13 beschrieben. Durch die zusätzliche Aufkonzentrierung kann in einem geringfügigen Ausmaß noch etwas Chloropren zusätzlich abgetrennt werden. Gleichzeitig wird der Feststoff-Anteil an Polychloropren in der nach der Abtrennung der entstehenden Trennphase verbleibenden Produkt-Polychloropren-Dispersion erhöht. Dadurch können nachfolgende Transportmengen und Transportkosten für das Polychloropren reduziert werden.

Insbesondere wird in der Stripper-Kolonne ein Dampf, insbesondere im Wesentlichen Wasserdampf, mit einem Überdruck Δp im Vergleich zum Druck der zugeführten Polychloropren-Dispersion von 3 bar ≤ Δp ≤ 10 bar, insbesondere 4 bar ≤ Δp ≤ 9 bar, vorzugsweise 5 bar ≤ Δp ≤ 8 bar und besonders bevorzugt 6 bar ≤ Δp ≤ 7 bar und/oder mit einer Sumpftemperatur von 55°C ≤ T ≤ 110°C, insbesondere 60°C ≤ T ≤ 100°C, vorzugsweise 65°C ≤ T ≤ 90°C und besonders bevorzugt 70°C ≤ T ≤ 80°C zugeführt. Durch einen derartig gewählten Dampf lässt sich auch bei einer größeren Stripper-Kolonne mit mehreren Böden der überwiegende Anteil an Chloropren abtrennen. Durch den Dampf kann bis auf wenige ppm das vorliegende Chloropren verdampft und kann über Kopf abgeführt werden sowie beispielsweise für eine weitere Polymerisation von Chloropren zu Polychloropren wiederverwertet werden.

Vorzugsweise gilt für ein Verhältnis R eines Massenstroms eines in der Stripper-Kolonne zugeführten Dampf, insbesondere im Wesentlichen Wasserdampf, zu einem Massenstrom des der Stripper-Kolonne zugeführten Polychloropren-Dispersion 0,04 ≤ R ≤ 0,20, insbesondere 0,06 ≤ R ≤ 0,17, vorzugsweise 0,08 ≤ R ≤ 0,14 und besonders bevorzugt 0,09 ≤ R ≤ 0,12. Bei diesem Dampf zu Polychloropren-Dispersion Verhältnis R kann in energieeffizienter Weise bis auf wenige ppm das vorliegende Chloropren in der zugeführten Polychloropren-Dispersion abgetrennt werden.

Besonders bevorzugt weist die Stripper-Kolonne eine Anzahl N an Stufen und/oder Böden auf, wobei für N 5 ≤ N ≤ 35, insbesondere 8 ≤ N ≤ 20, vorzugsweise 10 ≤ N ≤ 14 und besonders bevorzugt 11 ≤ N ≤ 13 gilt. Eine derartige Anzahl N, beispielsweise N=12, hat sich als besonders wirtschaftlich erwiesen, wobei eine größere Anzahl N für besonders geringe Chloropren-Anteile in der gereinigten Polychloropren-Dispersion natürlich technisch möglich ist. Insbesondere kann für die Stripper-Kolonne ein einziger Turm mit N Böden verwendet werden, so dass die Anzahl Böden der Anzahl Stufen entspricht. Bei einer derartigen Anzahl an Stufen bzw. Böden kann ein besonders hoher Anteil an Chloropren abgetrennt werden ohne dass ein Verstopfen der Stripper-Kolonne auftritt. Der hohe Reinheitsgrad der gereinigten Polychloropren-Dispersion wird gleichzeitig mit einem geringen Kostenaufwand besonders wirtschaftlich erreicht.

Insbesondere weist die Stripper-Kolonne eine Stufenhöhe h auf, die insbesondere 800 mm ≤ h ≤ 1500 mm, vorzugsweise 1000 mm ≤ h ≤ 1300 mm und besonders bevorzugt 1100 mm ≤ h ≤ 1200 mm beträgt und/oder eine Stufe und/oder ein Boden der Stripper-Kolonne bezogen auf einen kreisförmigen Querschnitt weist einen Durchmesser D auf, der insbesondere 500 mm ≤ D ≤ 5000 mm, vorzugsweise 1000 mm ≤ D ≤ 3000 mm und besonders bevorzugt 1500 mm ≤ D ≤ 2000 mm beträgt. Die Stufenhöhe h wird durch den Abstand zweier benachbarter Böden zueinander definiert. Als Böden können insbesondere Siebböden verwendet werden. Durch diese Dimensionieren der Stripper-Kolonne ergibt sich eine gute Trennleistung bei einem vergleichbar geringen Aufwand. Gleichzeitig kann die Stripper-Kolonne leicht gewartet und gereinigt werden.

Die Erfindung betrifft ferner eine Anlage zur Herstellung einer Polymer-Dispersion auf Basis von Polychloropren, insbesondere zur Durchführung des Verfahrens, das wie vorstehend beschrieben aus- und weitergebildet ist, mit einer Polymerisationseinheit zur Polymerisation von Chloropren zu Polychloropren in einer Emulsion, wobei die Polymerisationseinheit in Abhängigkeit von der verwendeten Rezeptur derart dimensioniert ist, dass eine nach der Polymerisation vorliegende Polychloropren-Dispersion mit einem maximalen Feststoffanteil w_{solid} in Gewichtsanteilen von w_{solid} ≤ 50%, insbesondere w_{solid} ≤ 40%, vorzugsweise w_{solid} ≤ 35% und besonders bevorzugt w_{solid} ≤ 30% erhältlich ist, und einer mit der Polymerisationseinheit direkt oder indirekt verbundenen mehrstufigen und/oder mehrbödigen Stripper-Kolonne zur Abtrennung von Chloropren aus der Polychloropren-Dispersion, wobei die Stripper-Kolonne in Abhängigkeit von der der Stripper-Kolonne zugeführten Polychloropren-Dispersion derart dimensioniert ist, dass eine nach dem Abtrennen von Chloropren vorliegenden gereinigten Polychloropren-Dispersion mit einem Chloroprenanteil w_{CR,out} ≤ 30ppm, vorzugsweise w_{CR,out} ≤ 15ppm und besonders bevorzugt w_{CR,out} ≤ 10ppm erhältlich ist.

Aufgrund der geeigneten Dimensionierungen der Polymerisationseinheit und der Stripper-Kolonne kann der Anteil von monomeren Chloropren in Polychloropren-Dispersionen gesenkt werden ohne eine signifikante Reduzierung der Betriebszeiten der verwendeten Anlagenteile in Kauf nehmen zu müssen. Durch den geringen Feststoffanteil der Polychloropren-Dispersion nach der Polymerisation kann bis auf wenige ppm das monomere Chloropren (Restmonomer) aus der Polychloropren-Dispersion abgetrennt werden ohne ein Verstopfen der Stripper-Kolonne zu riskieren. Die Anlage kann insbesondere wie vorstehend anhand des erfindungsgemäßen Verfahrens erläutert aus- und weitergebildet sein.

Besonders bevorzugt weist die Stripper-Kolonne zumindest teilweise eine wärmedämmende und/oder wärmeisolierende Ummantelung auf. Der durch den Dampf in die Stripper-Kolonne eingebrachte Energieeintrag wird dadurch zu einem Großteil in der Stripper-Kolonne gehalten ohne durch natürliche Kühlung an die Umgebung abgegeben zu werden. Die erforderliche Dampfmenge kann dadurch reduziert werden. Gleichzeitig kann gewährleistet werden, dass auch bei einer hohen Anzahl an Stufen und/oder Böden in der Stripper-Kolonne der Dampf eine ausreichend hohe Temperatur aufweist, um auch in den obersten Stufen bzw. Böden Chloropren zu verdampfen und auszutragen. Eine zusätzliche Zufuhr von Dampf an einer höheren Stelle der Stripper-Kolonne kann dadurch vermieden werden.

Die Erfindung betrifft ferner ein Fügeverfahren zum Verbinden eines ersten Teils mit einem zweiten Teil, wobei als Verbindungsmittel ein Kleber verwendet wird, der mit Hilfe einer Polymer-Dispersion auf Basis von Polychloropren hergestellt wurde, wobei die Polymer-Dispersion nach einem wie vorstehend beschriebenen Verfahren und/oder mit Hilfe einer wie vorstehend beschriebenen Anlage hergestellt wurde und einen Chloroprenanteil von w_{CR,out} ≤ 50ppm, insbesondere w_{CR,out} ≤ 30ppm, vorzugsweise w_{CR,out} ≤ 15ppm und besonders bevorzugt w_{CR,out} ≤ 10ppm aufweist. Aufgrund des besonders geringen Restmonomergehalts in der Polychloropren-Dispersion weist auch der aus dieser Polychloropren-Dispersion hergestellte Kleber einen besonders geringen Chloroprenanteil auf. Das Risiko durch diesen Kleber beim Fügen von Teilen die Umwelt und/oder die Gesundheit eines Anwenders zu beeinträchtigen ist deutlich reduziert.

Nachfolgend wird die Erfindung unter Bezugnahme auf die anliegende Zeichnung anhand eines bevorzugten Ausführungsbeispiels exemplarisch erläutert.

Es zeigt:

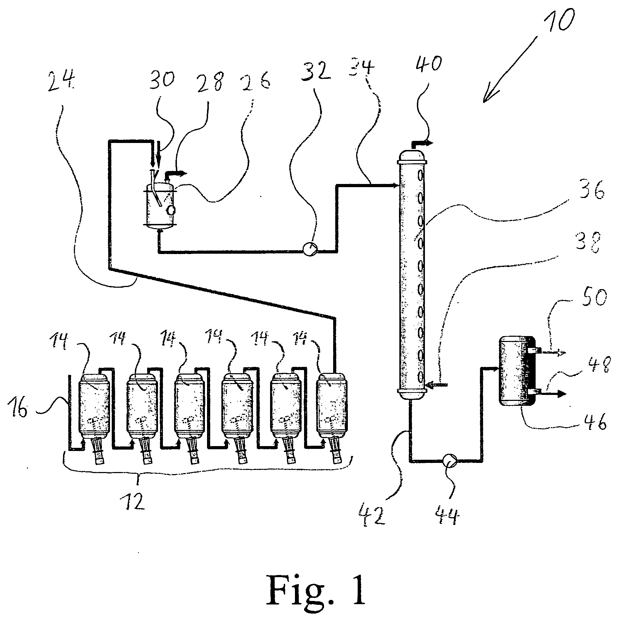

Fig. 1: ein schematisches Blockschaltbild der erfindungsgemäßen Anlage zur Durchführung des erfindungsgemäßen Verfahrens.

Die in Fig. 1 dargestellte Anlage 10 weist eine Polymerisationseinheit 12 auf, die als Rührkesselkaskade mit sechs in Reihe geschalteten Rührkesseln 14 ausgestaltet ist, um in der Polymerisationseinheit 12 eine quasi-kontinuierliche Polymerisation durchzuführen. In die Polymerisationseinheit wird über einen Zulauf 16 Chloropren, recyceltes Chloropren, Lösungsmittel, wie beispielsweise wässerige Phase und/oder H₂O eingeleitet. Die Polymerisationseinheit 12 ist in Bezug auf die verwendete Rezeptur und/der der verwendeten Prozessführung derart dimensioniert, dass eine über einen Polymerisations-Ablauf 24 die Polymerisationseinheit 12 verlassende Polychloropren-Dispersion einen vergleichweise geringen Feststoffanteil an Polychloropren aufweist. Beispielsweise wird die Reaktionstemperatur und/oder die Anzahl der Rührkessel 14 entsprechend gewählt. Zusätzlich oder alternativ ist es möglich den Umsatz von Chloropren und/oder die Lösungsmittelmenge entsprechend einzustellen.

Die nach der Polymerisation vorliegende Polychloropren-Dispersion wird über den Polymerisations-Ablauf 24 einer Vorentgasungseinheit 26 zugeführt, um gasförmige und/oder leicht flüchtige Bestandteile der Polychloropren-Dispersion über eine Entgasungsleitung 28 abzutrennen und gegebenenfalls aufzubereiten. Aufbereitete Anteile, die über die Entgasungsleitung 28 abgetrennt wurden, können gegebenenfalls über den Zulauf 16 wieder der Polymerisationseinheit 12 zugeführt werden. Um die Entgasung leicht flüchtiger Bestandteile der Polychloropren-Dispersion zu erleichtern, kann über eine Dampf-Zuleitung 30 Dampf in die Entgasungseinheit 26 eingeblasen werden.

Mit Hilfe einer ersten Förderpumpe 32 kann die Polychloropren-Dispersion über einen Stripper-Zulauf 34 einer Stripper-Kolonne 36 mit beispielsweise elf Böden in einem oberen Bereich der Stripper-Kolonne 36 zugeführt werden. In einem unteren Bereich der Stripper-Kolonne 36 wird über einen Dampf-Zulauf 38 Dampf in die Stripper-Kolonne 36 eingeblasen, um das Restmonomer der Polychloropren-Dispersion in Form von monomeren Chloropren über einen Brüden-Ablauf 40 über Kopf abzutrennen. Das über den Brüden-Ablauf 40 abgetrennte Chloropren kann aufbereitet und über den Zulauf 16 wieder der Polymerisationseinheit 12 zugeführt werden.

Die in der Stripper-Kolonne 36 gereinigte Polychloropren-Dispersion, die über einen Stripper-Ablauf 42 entnommen wird, weist einen Chloroprenanteil von nur noch wenigen ppm auf, wobei der Gewichtsanteil von Chloropren in der gereinigten Polychloropren-Dispersion deutlich kleiner als 50ppm ist und insbesondere 10ppm und weniger betragen kann. Mit Hilfe einer zweiten Förderpumpe 44 kann die gereinigte Polychloropren-Dispersion einer Aufrahmeinheit 46 zugeführt werden, wo das Polychloropren in der gereinigten Polychloropren-Dispersion aufkonzentriert wird. In der Aufrahmeinheit 46 werden beispielsweise zwei abtrennbare Phasen erzeugt, wobei eine aufkonzentrierte Produkt-Polychloropren-Dispersion über einen Produkt-Ablauf 48 abgeführt werden kann. Die andere Phase kann über einen Trennphasen-Ablauf 50 abgetrennt und gegebenenfalls aufbereitet und wiederverwendet werden.

## Patentansprüche

1. Verfahren zur Herstellung einer Polymer-Dispersion auf Basis von Polychloropren, mit den Schritten:
Durchführen einer Polymerisation von Chloropren zu Polychloropren in einer Emulsion bis zu einem maximalen Feststoffanteil w_{solid} in Gewichtsanteilen von w_{solid} ≤ 50%, insbesondere w_{solid} ≤ 40%, vorzugsweise w_{solid} ≤ 35% und besonders bevorzugt w_{solid} ≤ 30% in einer nach der Polymerisation vorliegenden Polychloropren-Dispersion, und
Abtrennen von Chloropren aus der Polychloropren-Dispersion in einer mehrstufigen und/oder mehrbödigen Stripper-Kolonne (36) bis zu einem Chloroprenanteil w_{CR,out} in Gewichtsanteilen von w_{CR,out} ≤ 50ppm, insbesondere w_{CR,out} ≤ 30ppm, vorzugsweise w_{CR,out} ≤ 15ppm und besonders bevorzugt w_{CR,out} ≤ 10ppm in einer nach dem Abtrennen von Chloropren vorliegenden gereinigten Polychloropren-Dispersion.

2. Verfahren nach Anspruch 1, **dadurch gekennzeichnet, dass** die der Stripper-Kolonne (36) zugeführte Polychloropren-Dispersion im Wesentlichen die gesamte wässrige Phase der unmittelbar nach der Polymerisation vorliegenden Polychloropren-Dispersion aufweist, wobei insbesondere der Polychloropren-Dispersion vor der Zufuhr in die Stripper Kolonne zusätzlich wässrige Phase und/oder Wasser zugefu̅hrt wurde.

3. Verfahren nach Anspruch 1 oder 2, **dadurch gekennzeichnet, dass** die Polymerisation überwiegend durch eine Batch-Reaktion in mindestens einem Batch-Reaktor erfolgt, wobei die nach der Polymerisation vorliegende Polychloropren-Dispersion vor dem Abtrennen in der Stripper-Kolonne (36) einem Puffer-Tank zugeführt wird, wobei die Polychloropren-Dispersion von dem Puffer-Tank der Stripper-Kolonne (36) im Wesentlichen kontinuierlich zugeführt wird.

4. Verfahren nach einem der Ansprüche 1 bis 3, **dadurch gekennzeichnet, dass** die der Stripper-Kolonne (36) zugeführte Polychloropren-Dispersion einen Chloroprenanteil w_{CR,in} in Gewichtsanteilen von 200ppm ≤ w_{CR.in} ≤ 30000ppm, insbesondere 2000ppm ≤ w_{CR,in} ≤ 20000ppm und besonders bevorzugt 05000ppm ≤ w_{CR,in} ≤ 15000ppm aufweist.

5. Verfahren nach einem der Ansprüche 1 bis 4, **dadurch gekennzeichnet, dass** nach dem Durchfu̅hren der Polymerisation und vor dem Abtrennen von Chloropren eine Entgasung der nach der Polymerisation vorliegenden Polychloropren-Dispersion durchgeführt wird.

6. Verfahren nach einem der Ansprüche 1 bis 5, **dadurch gekennzeichnet, dass** nach dem Abtrennen von Chloropren eine Aufkonzentrierung der gereinigten Polychloropren-Dispersion, insbesondere mit Hilfe eines Aufrahmprozesses, durchgeführt wird.

7. Verfahren nach einem der Ansprüche 1 bis 6, **dadurch gekennzeichnet, dass** in der Stripper-Kolonne (36) in Dampf, insbesondere im Wesentlichen Wasserdampf, mit einem Überdruck Δp im Vergleich zum Druck der zugeführten Polychloropren-Dispersion von 3 bar ≤ Δp ≤ 10 bar, insbesondere 4 bar ≤ Δp ≤ 9 bar, vorzugsweise 5 bar ≤ Δp ≤ 8 bar und besonders bevorzugt 6 bar ≤ Δp ≤ 7 bar und/oder mit einer Sumpftemperatur von 55°C ≤ T ≤ 110°C, insbesondere 60°C ≤ T ≤ 100°C, vorzugsweise 65°C ≤ T ≤ 90°C und besonders bevorzugt 70°C ≤ T ≤ 80°C zugeführt wird.

8. Verfahren nach einem der Ansprüche 1 bis 7, **dadurch gekennzeichnet, dass** für ein Verhältnis R eines Massenstroms eines in der Stripper-Kolonne(36) zugeführten Dampf, insbesondere im Wesentlichen Wasserdampf, zu einem Massenstrom des der Stripper-Kolonne (36) zugeführten Polychloropren-Dispersion 0,04 ≤ R ≤ 0,20, insbesondere 0,06 ≤ R ≤ 0,17, vorzugsweise 0,08 ≤ R ≤ 0,14 und besonders bevorzugt 0,09 ≤ R ≤ 0,12 gilt.

9. Verfahren nach einem der Ansprüche 1 bis 8, **dadurch gekennzeichnet, dass** die Stripper-Kolonne (36) eine Anzahl N an Stufen und/oder Böden aufweist, wobei für N 5 ≤ N ≤ 35, insbesondere 8 ≤ N ≤ 20, vorzugsweise 10 ≤ N ≤ 13 und besonders bevorzugt 11 ≤ N ≤ 12 gilt.

10. Verfahren nach einem der Ansprüche 1 bis 9, **dadurch gekennzeichnet, dass** die Stripper-Kolonne (36) eine Stufenhöhe h aufweist, die insbesondere 800 mm ≤ h ≤ 1500 mm, vorzugsweise 1000 mm ≤ h ≤ 1300 mm und besonders bevorzugt 1100 mm ≤ h ≤ 1200 mm beträgt und/oder eine Stufe und/oder ein Boden der Stripper-Kolonne (36) bezogen auf einen kreisförmigen Querschnitt einen Durchmesser D aufweist, der insbesondere 500 mm ≤ D ≤ 5000 mm, vorzugsweise 1000 mm ≤ D ≤ 3000 mm und besonders bevorzugt 1500 mm ≤ D ≤ 2000 mm beträgt.

11. Anlage zur Herstellung einer Polymer-Dispersion auf Basis von Polychloropren, insbesondere zur Durchführung des Verfahrens nach einem der Ansprüche 1 bis 10, mit
einer Polymerisationseinheit (12) zur Polymerisation von Chloropren zu Polychloropren in einer Emulsion, wobei die Polymerisationseinheit (12) in Abhängigkeit von der verwendeten Rezeptur derart dimensioniert ist, dass eine nach der Polymerisation vorliegende Polychloropren-Dispersion mit einem maximalen Feststoffanteil w_{solid} in Gewichtsanteilen von w_{solid} ≤ 50%, insbesondere w_{solid} ≤ 40%, vorzugsweise w_{solid} ≤ 35% und besonders bevorzugt w_{solid} ≤ 30% erhältlich ist, und
einer mit der Polymerisationseinheit (12) direkt oder indirekt verbundenen mehrstufigen und/oder mehrbödigen Stripper-Kolonne (36) zur Abtrennung von Chloropren aus der Polychloropren-Dispersion, wobei die Stripper-Kolonne (36) in Abhängigkeit von der der Stripper-Kolonne (36) zugeführten Polychloropren-Dispersion derart dimensioniert ist, dass eine nach dem Abtrennen von Chloropren vorliegenden gereinigten Polychloropren-Dispersion mit einem Chloroprenanteil w_{CR,out} in Gewichtsanteilen von w_{CR,out} ≤ 50ppm, insbesondere w_{CR,out} ≤ 30ppm, vorzugsweise w_{CR,out} ≤ 15ppm und besonders bevorzugt w_{CR,out} ≤ 10ppm erhältlich ist.

12. Anlage nach Anspruch 11, **dadurch gekennzeichnet, dass** die Stripper-Kolonne (36) zumindest teilweise eine wärmedämmende und/oder wärmeisolierende Ummantelung aufweist.

13. Fügeverfahren zum Verbinden eines ersten Teils mit einem zweiten Teil, wobei als Verbindungsmittel ein Kleber verwendet wird, der mit Hilfe einer Polymer-Dispersion auf Basis von Polychloropren hergestellt wurde, wobei die Polymer-Dispersion nach dem Verfahren nach einem der Ansprüche 1 bis 10 und/oder mit Hilfe einer Anlage nach Anspruch 11 oder 12 hergestellt wurde und einen Chloroprenanteil von w_{CR,out} ≤ 50ppm, insbesondere w_{CR,out} ≤ 30ppm, vorzugsweise w_{CR,out} ≤ 15ppm und besonders bevorzugt w_{CR,out} ≤ 10ppm aufweist.

## Claims

1. Process for preparing a polymer dispersion based on polychloroprene, which comprises the steps:
carrying out a polymerization of chloroprene to polychloroprene in an emulsion up to a maximum solids content w_{solid} in parts by weight of w_{solid} ≤ 50%, in particular w_{solid} ≤ 40%, preferably w_{solid} ≤ 35% and particularly preferably w_{solid} ≤ 30%, in a polychloroprene dispersion present after the polymerization, and
separation of chloroprene from the polychloroprene dispersion in a multistage and/or multitray stripper column (36) down to a chloroprene content w_{CR,out} in parts by weight of w_{CR,out} ≤ 50 ppm, in particular w_{CR,out} ≤ 30 ppm, preferably w_{CR,out} ≤ 15 ppm and particularly preferably w_{CR},ₒᵤₜ ≤ 10 ppm, in a purified polychloroprene dispersion present after the removal of chloroprene.

2. Process according to Claim 1, **characterized in that** the polychloroprene dispersion fed to the stripper column (36) comprises essentially the entire aqueous phase of the polychloroprene dispersion present immediately after the polymerization, where, in particular, aqueous phase and/or water has been additionally added to the polychloroprene dispersion before introduction into the stripper column.

3. Process according to Claim 1 or 2, **characterized in that** the polymerization is predominantly carried out by means of a batch reaction in at least one batch reactor, where the polychloroprene dispersion present after the polymerization is fed to a buffer tank before the separation in the stripper column (36) and the polychloroprene dispersion is conveyed essentially continuously from the buffer tank into the stripper column (36).

4. Process according to any of Claims 1 to 3, **characterized in that** the polychloroprene dispersion fed to the stripper column (36) has a chloroprene content w_{CR,in} in parts by weight such that 200 ppm ≤ w_{CR,in} ≤ 30 000 ppm, in particular 2000 ppm ≤ w_{CR,in} ≤ 20 000 ppm and particularly preferably 5000 ppm ≤ w_{CR,in} ≤ 15 000 ppm.

5. Process according to any of Claims 1 to 4, **characterized in that** degassing of the polychloroprene dispersion present after the polymerization is carried out after the polymerization has been carried out and before the removal of chloroprene.

6. Process according to any of Claims 1 to 5, **characterized in that** concentration of the purified polychloroprene dispersion is carried out, in particular by means of a skimming process, after the removal of chloroprene.

7. Process according to any of Claims 1 to 6, **characterized in that** a vapour, in particular essentially water vapour, having an overpressure Δp relative to the pressure of the introduced polychloroprene dispersion such that 3 bar ≤ Δpt ≤ 10 bar, in particular 4 bar ≤ Δp ≤ 9 bar, preferably 5 bar ≤ Δp ≤ 8 bar and particularly preferably 6 bar ≤ Δp ≤ 7 bar, and/or having a temperature at the bottom such that 55°C ≤ T ≤ 110°C, in particular 60°C ≤ T ≤ 100°C, preferably 65°C ≤ T ≤ 90°C and particularly preferably 70°C ≤ T ≤ 80°C, is fed into the stripper column (36).

8. Process according to any of Claims 1 to 7, **characterized in that** a ratio R of a mass flow of a vapour, in particular essentially water vapour, fed into the stripper column (36) to a mass flow of the polychloroprene dispersion fed to the stripper column (36) is such that 0.04 ≤ R ≤ 0.20, in particular 0.06 ≤ R ≤ 0.17, preferably 0.08 ≤ R ≤ 0.14 and particularly preferably 0.09 ≤ R ≤ 0.12.

9. Process according to any of Claims 1 to 8, **characterized in that** the stripper column (36) has a number N of stages and/or trays, where N is such that 5 ≤ N ≤ 35, in particular 8 ≤ N ≤ 20, preferably 10 ≤ N ≤ 13 and particularly preferably 11 ≤ N ≤ 12.

10. Process according to any of Claims 1 to 9, **characterized in that** the stripper column (36) has a stage height h which is, in particular, such that 800 mm ≤ h ≤ 1500 mm, preferably 1000 mm ≤ h ≤ 1300 mm and particularly preferably 1100 mm ≤ h ≤ 1200 mm, and/or a stage and/or a tray of the stripper column (36) has, based on a circular cross section, a diameter D which is, in particular, such that 500 mm ≤ D ≤ 5000 mm, preferably 1000 mm ≤ D ≤ 3000 mm and particularly preferably 1500 mm ≤ D ≤ 2000 mm.

11. Plant for preparing a polymer dispersion based on polychloroprene, in particular for carrying out the process according to any of Claims 1 to 10, which comprises
a polymerization unit (12) for the polymerization of chloroprene to polychloroprene in an emulsion, where the polymerization unit (12) is dimensioned, as a function of the formulation used, in such a way that a polychloroprene dispersion present after the polymerization having a maximum solids content w_{solid} in parts by weight of w_{solid} ≤ 50%, in particular w_{solid} ≤ 40%, preferably w_{solid} ≤ 35% and particularly preferably w_{solid} ≤ 30%, can be obtained and
a multistage and/or multitray stripper column (36) for separating chloroprene from the polychloroprene dispersion which is directly or indirectly connected to the polymerization unit (12), where the stripper column (36) is dimensioned, as a function of the polychloroprene dispersion fed to the stripper column (36), in such a way that a purified polychloroprene dispersion present after the removal of chloroprene having a chloroprene content w_{CR,out} in parts by weight of w_{CR,out} ≤ 50 ppm, in particular w_{CR,out} ≤ 30 ppm, preferably w_{CR},ₒᵤₜ ≤ 15 ppm and particularly preferably w_{CR},ₒᵤₜ ≤ 10 ppm, can be obtained.

12. Plant according to Claim 11, **characterized in that** the stripper column (36) at least partly has a thermally blanketing and/or thermally insulating cladding.

13. Joining method for joining a first part to a second part, wherein an adhesive which has been produced by means of a polymer dispersion based on polychloroprene is used as joining means, where the polymer dispersion has been prepared by the process according to any of Claims 1 to 10 and/or by means of a plant according to Claim 11 or 12 and has a chloroprene content of w_{CR,}out ≤ 50 ppm, in particular w_{CR,out} ≤ 30 ppm, preferably w_{CR,out} ≤ 15 ppm and particularly preferably w_{CR,out} ≤ 10 ppm.

## Revendications

1. Procédé pour la préparation d'une dispersion de polymère à base de polychloroprène, présentant les étapes :
réalisation d'une polymérisation de chloroprène en polychloroprène dans une émulsion jusqu'à une proportion maximale en solides w_{solide} en proportions pondérales de w_{solide} ≤ 50%, en particulier de w_{solide} ≤ 40%, de préférence de w_{solide} ≤ 35% et de manière particulièrement préférée de w_{solide} ≤ 30% dans une dispersion de polychloroprène obtenue après polymérisation, et
séparation du chloroprène de la dispersion de polychloroprène dans une colonne (36) d'extraction à plusieurs étages et/ou à plusieurs plateaux jusqu'à une proportion de chloroprène w_{CR.out} en des proportions pondérales de w_{CR.out} ≤ 50 ppm, en particulier de w_{CR.out} ≤ 30 ppm, de préférence de w_{CR.out} ≤ 15 ppm et de manière particulièrement préférée de w_{CR.out} ≤ 10 ppm dans une dispersion de polychloroprène purifiée obtenue après la séparation de chloroprène.

2. Procédé selon la revendication 1, **caractérisé en ce que** la dispersion de polychloroprène introduite dans la colonne d'extraction (36) présente sensiblement la totalité de la phase aqueuse de la dispersion de polychloroprène obtenue directement après la polymérisation, la dispersion de polychloroprène étant en particulier additionnée, avant l'alimentation dans la colonne d'extraction, de phase aqueuse et/ou d'eau supplémentaire.

3. Procédé selon la revendication 1 ou 2, **caractérisé en ce que** la polymérisation a principalement lieu par une réaction par lots dans au moins un réacteur par lots, la dispersion de polychloroprène obtenue après la polymérisation étant alimentée, avant la séparation dans la colonne d'extraction (36), dans un réservoir tampon, la dispersion de polychloroprène étant alimentée du réservoir tampon de manière sensiblement continue dans la colonne d'extraction (36).

4. Procédé selon l'une quelconque des revendications 1 à 3, **caractérisé en ce que** la dispersion de polychloroprène alimentée dans la colonne d'extraction (36) présente une proportion de chloroprène w_{CR.in} en proportions pondérales de 200 ppm ≤ w_{CR.in} ≤ 30 000 ppm, en particulier de 2000 ppm ≤ w_{CR.in} ≤ 20 000 ppm et de manière particulièrement préférée de 5000 ppm ≤ w_{CR}.ᵢₙ ≤ 15 000 ppm.

5. Procédé selon l'une quelconque des revendications 1 à 4, **caractérisé en ce qu'**on réalise, après la réalisation de la polymérisation et avant la séparation de chloroprène, un dégazage de la dispersion de polychloroprène obtenue après la polymérisation.

6. Procédé selon l'une quelconque des revendications 1 à 5, **caractérisé en ce qu'**on réalise, après la séparation de chloroprène, une concentration de la dispersion de polychloroprène purifiée, en particulier à l'aide d'un procédé de crémage.

7. Procédé selon l'une quelconque des revendications 1 à 6, **caractérisé en ce que** la colonne d'extraction (36) est alimentée en vapeur, en particulier sensiblement en vapeur d'eau, présentant une surpression Δp par rapport à la pression de la dispersion de polychloroprène introduite de 3 bars 5 Δp ≤ 10 bars, en particulier de 4 bars ≤ Δp 9 bars, de préférence de 5 bars ≤ Δp ≤ 8 bars et de manière particulièrement préférée de 6 bars ≤ Δp ≤ 7 bars et/ou à une température du fond de 55°C ≤ T ≤ 110°C, en particulier de 60°C ≤ T ≤ 100°C, de préférence de 65°C ≤ T ≤ 90°C et de manière particulièrement préférée de 70°C ≤ T ≤ 80°C.

8. Procédé selon l'une quelconque des revendications 1 à 7, **caractérisé en ce que** le rapport R d'un flux massique de vapeur alimentée dans la colonne d'extraction (36), en particulier sensiblement de la vapeur d'eau, à un flux massique de la dispersion de polychloroprène alimentée dans la colonne d'extraction (36) vaut 0,04 ≤ R ≤ 0,20, en particulier 0,06 ≤ R ≤ 0,17, de préférence 0,08 ≤ R ≤ 0,14 et de manière particulièrement préférée 0,09 ≤ R ≤ 0,12.

9. Procédé selon l'une quelconque des revendications 1 à 8, **caractérisé en ce que** la colonne d'extraction (36) présente un nombre N d'étages et/ou de plateaux, N valant 5 ≤ N ≤ 35, en particulier 8 ≤ N ≤ 20, de préférence 10 ≤ N ≤ 13 et de manière particulièrement préférée 11 ≤ N ≤ 12.

10. Procédé selon l'une quelconque des revendications 1 à 9, **caractérisé en ce que** la colonne d'extraction (36) présente une hauteur d'étage h en particulier de 800 mm ≤ h ≤ 1500 mm, de préférence de 1000 mm ≤ h ≤ 1300 mm et de manière particulièrement préférée de 1100 mm ≤ h ≤ 1200 mm et/ou un étage et/ou un plateau de la colonne d'extraction (36), par rapport à une section circulaire, présente un diamètre D qui vaut en particulier 500 mm ≤ D ≤ 5000 mm, de préférence 1000 mm ≤ D ≤ 3000 mm et de manière particulièrement préférée 1500 mm ≤ D ≤ 2000 mm.

11. Installation pour la préparation d'une dispersion de polymère à base de polychloroprène, en particulier pour réaliser le procédé selon l'une quelconque des revendications 1 à 10, présentant
une unité de polymérisation (12) pour la polymérisation de chloroprène en polychloroprène dans une émulsion, l'unité de polymérisation (12) étant dimensionnée, en fonction de la formulation utilisée de manière telle qu'on obtient une dispersion de polychloroprène après la polymérisation présentant une proportion maximale en solides w_{solide} en proportions pondérales de w_{solide} ≤ 50%, en particulier de w_{solide} ≤ 40%, de préférence de w_{solide} ≤ 35% et de manière particulièrement .préférée de w_{solide} ≤ 30%, et
une colonne d'extraction (36) à plusieurs étages et/ou à plusieurs plateaux reliée directement ou indirectement à l'unité de polymérisation (12) pour la séparation du chloroprène de la dispersion de polychloroprène, la colonne d'extraction (36) étant dimensionnée en fonction de la dispersion de polychloroprène alimentée dans la colonne d'extraction (36) de manière telle qu'on obtient une dispersion de polychloroprène purifiée obtenue après la séparation du chloroprène présentant une proportion de chloroprène w_{CR.out,} en proportion pondérales de w_{CR.out} ≤ 50 ppm, en particulier de w_{CR.out} ≤ 30 ppm, de préférence de w_{CR.out} ≤ 15 ppm et de manière particulièrement préférée de w_{CR.out} ≤ 10 ppm.

12. Installation selon la revendication 11, **caractérisée en ce que** la colonne d'extraction (36) présente au moins partiellement une enveloppe calorifuge et/ou thermo-isolante.

13. Procédé d'assemblage pour assembler une première pièce avec une deuxième pièce, en utilisant comme agent d'assemblage un adhésif qui a été préparé à l'aide d'une dispersion de polymère à base de polychloroprène, la dispersion de polymère ayant été préparée selon le procédé selon l'une quelconque des revendications 1 à 10 et/ou à l'aide d'une installation selon la revendication 11 ou 12 et présentant une proportion de chloroprène w_{CR.out} ≤ 50 ppm, en particulier w_{CR.out} ≤ 30 ppm, de préférence w_{CR.out} ≤ 15 ppm et de manière particulièrement préférée w_{CR.out} ≤ 10 ppm.
